# EUROPÄISCHE PATENTSCHRIFT

(11) **EP 2 262 590 B1**
(45) Veröffentlichungstag und Bekanntmachung des Hinweises auf die Patenterteilung: **29.05.2013**
(21) Anmeldenummer: 09730282.2
(22) Anmeldetag: 11.03.2009
(51) Int. Cl.: G01B 11/25, G01B 11/06, B05B 15/12, B05B 12/00, B05B 12/08, B05B 13/04

(54) **LACKIERANLAGE MIT EINER MESSZELLE ZUR SCHICHTDICKENMESSUNG**
PAINTING STATION COMPRISING A MEASURING CELL FOR MEASURING THE LAYER THICKNESS
INSTALLATION DE MISE EN PEINTURE COMPORTANT UNE CELLULE DE MESURE SERVANT À LA MESURE D'ÉPAISSEUR DE COUCHE

(30) Priorität: 08.04.2008 DE 102008017838
(43) Veröffentlichungstag der Anmeldung: 22.12.2010
(73) Patentinhaber: Dürr Systems GmbH, 74321 Bietigheim-Bissingen (DE)
(72) Erfinder: HAAS, Jürgen, 75438 Knittlingen (DE); HERRE, Frank, 71739 Oberriexingen (DE); FRITZ, Hans-Georg, 73760 Ostfildern (DE); WESSELKY, Steffen, 73099 Adelberg (DE)
(74) Vertreter: Beier, Ralph
(86) Internationale Anmeldenummer: PCT/EP2009/001738
(87) Internationale Veröffentlichungsnummer: WO 2009/124628

(56) Entgegenhaltungen:
- EP-A- 1 176 388
- WO-A-96/07077
- DE-A1- 10 138 167
- DE-A1- 19 948 837
- DE-A1-102006 009 912
- JP-A- 8 050 103
- JP-A- 11 295 040
- JP-A- 2001 116 520
- JP-A- 2001 286 798

## Beschreibung

Die Erfindung betrifft eine Lackieranlage zur serienweisen Lackierung von Bauteilen, insbesondere von Kraftfahrzeugkarosserien, gemäß dem Oberbegriff des Hauptanspruchs.

Zum Stand der Technik gehören Lackieranlagen zur serienweisen Lackierung von Kraftfahrzeugkarosserien, bei denen im Lackierbetrieb laufend ("Online") die Schichtdicke des aufgebrachten Lacks in einer Messkabine gemessen wird. Hierzu dienen berührungslos arbeitende Schichtdickenmessgeräte, die auf einem photothermischen Prinzip beruhen, das beispielsweise in DE 195 20 788 C2 beschrieben ist. Diese bekannten Schichtdickenmessgeräte bestrahlen die zu vermessende Oberfläche der Kraftfahrzeugkarosserien in der Messkabine punktuell mit einem Laserstrahl im nicht sichtbaren Wellenlängenbereich, wodurch der Lackschicht Energie zugeführt wird, die in langwellige Wärmestrahlung umgewandelt und von einem Strahlungsdetektor erfasst wird. Aus der reflektierten Strahlung kann dann die Schichtdicke abgeleitet werden.

Nachteilig an dieser bekannten Art der Schichtdickenmessung ist zunächst die Tatsache, dass die Messung nur punktuell erfolgt, so dass für eine flächige Vermessung der Schichtdicke eine Vielzahl von Einzelmessungen erforderlich ist. So wird derzeit bei jeder Kraftfahrzeugkarosserie die Schichtdicke des aufgebrachten Lacks an 60-100 Messpunkten gemessen, die über die Kraftfahrzeugkarosserie verteilt sind. Die Vielzahl der erforderlichen Einzelmessungen erfordert bei einer vorgegebenen Messdauer der Einzelmessungen und einer ebenfalls vorgegebenen Taktzeit der Lackieranlage eine bestimmte minimale Kabinenlänge der Messkabine, wobei in der Praxis Kabinenlängen von 5 bis 7 Metern erforderlich sind, was die nachträgliche Integration derartiger Messkabinen in eine bestehende Lackieranlage erschwert.

Ein weiterer Nachteil der vorstehend beschriebenen bekannten Schichtdickenmessung besteht darin, dass aufgrund der erforderlichen Energiedichte Laser eingesetzt werden müssen, die bei einer bestimmten Kombination aus Bestrahlungsleistung, Wellenlänge und Divergenz des Laserstrahls gefährlich für Augen und Haut sind. Insbesondere bei Laserstrahlung im nicht sichtbaren Wellenlängenbereich besteht eine Gefahr für das menschliche Auge, da das Auge die Laserstrahlung dann nicht wahrnehmen kann. Bei den bekannten Lackieranlagen mit dieser Schichtdickenmessung muss die Messkabine also eine bestimmte minimale Kabinenlänge aufweisen, um zu verhindern, dass der Laserstrahl die Messkabine verlassen kann.

Bei der bekannten Schichtdickenmessung ist also aus verschiedenen Gründen eine relativ große Kabinenlänge der Messkabine erforderlich, was eine nachträgliche Integration in eine bestehende Lackieranlage erschwert oder sogar verhindert.

Aus US 7 220 966 B2 ist eine Lackieranlage zur Lackierung von Kraftfahrzeugkarosseriebauteilen bekannt, wobei die Kraftfahrzeugkarosseriebauteile nach einer Lackierung in einem Infrarotofen aushärten und anschließend von einem Infrarotsensor vermessen werden, um Lackfehler zu erkennen. Dieses bekannte Vermessungsverfahren ermöglicht jedoch nicht oder nur in unbefriedigender Weise die Bestimmung der Schichtdicke eines Lacks.

Ferner ist zum Stand der Technik noch hinzuweisen auf DE 10 2006 009 912 A1, DE 197 49 984 C2, Impuls-Thermographie, Fraunhofer Allianz Vision, Version vom 14. Juni 2007, DE 195 20 788 C2, EP 1 749 584 A1, GB 2 367 773 A, DE 195 17 494 C2, US 5 598 099 A und DE 197 56 467 A1.

Weiterhin ist zum Stand der Technik hinzuweise auf DE 101 38 167 A1, DE 10 2006 009 912 A1, DE 199 48 837 A1 und JP 2001 116520 A.

Schließlich offenbart WO 96/07077 A1 eine Lackieranlage gemäß dem Oberbegriff des Patentanspruchs 1. Hierbei sind die Strahlungsquelle und der Strahlungsdetektor jedoch nicht an einer beweglichen Portalmaschine angeordnet.

Der Erfindung liegt deshalb die Aufgabe zugrunde, die bekannten Lackieranlagen mit einer Schichtdickenmessung entsprechend zu verbessern. Insbesondere ist es wünschenswert, die minimale Kabinenlänge der Messkabine zu verringern, damit die Messkabine bzw. Messzelle auch nachträglich in eine bestehende Lackieranlage integriert werden kann.

Diese Aufgabe wird durch eine erfindungsgemäße Lackieranlage gemäß dem Hauptanspruch gelöst.

Die Erfindung umfasst die allgemeine technische Lehre, die Schichtdickenmessung in einer Lackieranlage in neuartiger Weise durchzuführen, um eine Verringerung der erforderlichen Kabinen- bzw. Zonenlänge der Messkabine bzw. Messzone zu ermöglichen. So sieht die Erfindung anstelle der bekannten punktuellen Bestrahlung der zu vermessenden Bauteiloberfläche mit Laserstrahlung im nicht-sichtbaren Wellenlängenbereich vor, dass die zu vermessenden Bauteiloberflächen flächig (2-dimensional) bestrahlt und vermessen werden. Dies bietet den Vorteil, dass die Anzahl der erforderlichen Einzelmessungen verringert werden, was wiederum eine Verkürzung der Messzelle ermöglicht und dadurch eine Integration der Messzelle in eine bestehende Lackieranlage erleichtert.

Vorzugsweise wird die zu vermessende Bauteiloberfläche im sichtbaren Wellenlängenbereich bestrahlt, wozu beispielsweise Blitzlichter oder Gasentladungslampen eingesetzt werden können. Die Anregung der zu vermessenden Bauteiloberfläche muss jedoch nicht zwingend mittels Licht erfolgen, sondern kann allgemein mit Strahlung erfolgen. Mögliche Strahlungsquellen sind Ultraschallsender, Lichtquellen, Blitzlichtquellen oder Leuchtdioden (LEDs), die hinsichtlich Energiedichte und Wellenlänge ungefährliches Licht emittieren.

Weiterhin kann die Strahlungsanregung der zu vermessenden Oberfläche wahlweise in Form von Einzelpulsen, Pulsfolgen, moduliert oder kontinuierlich erfolgen.

Zum Einen bietet die Bestrahlung der zu vermessenden Bauteiloberflächen mit sichtbarem Licht den Vorteil, dass keine Gesundheitsgefährdung besteht, sofern die Strahlungsleistung gering ist und die Wellenlänge so ausgebildet ist, dass übliche Glasscheiben zur Absorption führen, so dass die Messzelle kürzer ausfallen kann, da keine Maßnahmen erforderlich sind, um einen Austritt der gesundheitsgefährdenden Laserstrahlung zu verhindern.

Zum Anderen bietet die Bestrahlung mittels einer Blitzlampe oder einer Gasentladungslampe den bereits vorstehend erwähnten Vorteil, dass die Bestrahlung der zu vermessenden Bauteiloberflächen flächig (zweidimensional) erfolgt, so dass im Rahmen einer einzigen Messung die Schichtdicke nicht nur punktuell gemessen wird, sondern über eine bestimmte Messfläche. Dadurch kann die Anzahl der erforderlichen Einzelmessungen verringert werden, was wiederum eine Verkürzung der Messzelle ermöglicht und dadurch eine Integration der Messzelle in eine bestehende Lackieranlage erleichtert.

Die Erfindung ist nicht auf eine bestimmte Größe der Messfläche beschränkt, jedoch ist zu erwähnen, dass die Messfläche vorzugsweise größer ist als 10 cm², 50 cm², 100 cm², 250 cm², 500 cm², 1000 cm², 1 m² oder 2 m². Der im Rahmen der Erfindung verwendete Begriff der Messfläche bedeutet, dass die Schichtdicke innerhalb der Messfläche in einem einzigen Messvorgang zweidimensional ermittelt werden kann.

Bei einer Messung mittels einer Infrarotkamera wird die Schichtdicke in jedem Pixel der Infrarotkamera gemessen. Dies ergibt viele Schichtdickenwerte je Messung, entsprechend der Anzahl der Pixel der Infrarotkamera. Weiterhin kann auch lokal über mehrere Pixel gemittelt werden.

Bei der erfindungsgemäßen Lackieranlage weist die Messzelle also als Strahlungsquelle bzw. Anregungsquelle vorzugsweise eine Blitzlampe oder eine Gasentladungslampe und als Strahlungsdetektor vorzugsweise eine Infrarotkamera auf. Besonders vorteilhaft ist es hierbei, wenn der Strahlungsdetektor eine weitwinklige Messempfindlichkeit aufweist und die Oberfläche der lackierten Bauteile flächig (zweidimensional) innerhalb der jeweiligen Messfläche vermisst.

Gemäß der Erfindung sind die Strahlungsquelle und der Strahlungsdetektor in der Messzelle auf einer Portalmaschine angeordnet, die den Transportweg überspannt, wobei die Portalmaschine entlang des Transportweges verfahrbar ist.

Besonders vorteilhaft an der erfindungsgemäßen Lackieranlage ist die Tatsache, dass die Messzelle entlang dem Transportweg nur eine relativ geringe Zonenlänge benötigt, die in der Regel kleiner ist als die Zonenlänge der Lackierzelle. Beispielsweise kann die Zonenlänge der Messzelle kleiner sein als 7 m, 5 m, 3 m, 2 m oder 1 m, um beispielhaft einige Grenzwerte zu nennen.

In einem Ausführungsbeispiel der Erfindung ist in der Messzelle eine Führung für den Strahlungsdetektor und/oder für die Strahlungsquelle angeordnet, so dass der Strahlungsdetektor und/oder die Strahlungsquelle in vertikaler und/oder lateraler Richtung verschiedene Relativpositionen bezüglich der lackierten Bauteile einnehmen kann. Diese bewegliche Anordnung des Strahlungsdetektors und/oder der Strahlungsquelle ermöglicht es, dass in der Messzelle nur ein einziger Strahlungsdetektor und/oder eine einzige Strahlungsquelle angeordnet ist. Zur Vermessung der verschiedenen Bauteiloberflächen (z.B. Dachflächen, Seitenflächen) der zu vermessenden Bauteile werden der Strahlungsdetektor und/oder die Strahlungsquelle dann innerhalb der Messzelle relativ zu dem vermessenden Bauteil in eine geeignete Relativposition gebracht.

In einem anderen Ausführungsbeispiel der Erfindung ermöglicht der Strahlungsdetektor dagegen von einer vorgegebenen Position aus die Vermessung mehrerer Teilflächen der Bauteile, die zueinander angewinkelt sind. Beispielsweise kann der Strahlungsdetektor in diesem Ausführungsbeispiel von einer Position aus sowohl eine Seitenfläche als auch die Dach- und Haubenflächen ausmessen. Dies ermöglicht eine vollständige Vermessung der lackierten Bauteile mit nur zwei Strahlungsdetektoren bzw. Strahlungsquellen, die innerhalb der Messzelle an geeigneten Positionen angebracht sind. Auch hierbei kann eine Führung vorgesehen sein, um die Strahlungsdetektoren und/oder die Strahlungsquellen innerhalb der Messzelle in lateraler und/oder vertikaler Richtung zu positionieren.

In einem weiteren Ausführungsbeispiel der Erfindung sind dagegen in der Messzelle drei Strahlungsdetektoren und/oder drei Strahlungsquellen vorgesehen, die vorzugsweise in vertikaler und in lateraler Richtung bezüglich der Bauteile ortsfest angeordnet sind. Hierbei sind vorzugsweise zwei der Strahlungsdetektoren und/oder zwei der Strahlungsquellen seitlich neben dem Transportweg auf gegenüberliegenden Seiten angeordnet und vermessen die beiden Seitenflächen der lackierten Bauteile. Einer der Strahlungsdetektoren und/oder eine der Strahlungsquellen sind dagegen vorzugsweise über dem Transportweg angeordnet und vermessen die waagerechten Flächen der lackierten Bauteile, wie beispielsweise die Dachflächen und die Haubenflächen von Kraftfahrzeugkarosserien.

Bei den vorstehend beschriebenen Ausführungsbeispielen sind die Portalmaschine und/oder die Führung für die Strahlungsquellen bzw. Strahlungsdetektoren entlang des Transportweges verschiebbar, beispielsweise kann eine steuerbare Verschiebevorrichtung vorgesehen sein. Bei einem kontinuierlichen Transport der lackierten Bauteile durch die Messzelle wird die Verschiebevorrichtung dann vorzugsweise von einer Anlagensteuerung der Lackieranlage so angesteuert, dass sich die Strahlungsquellen bzw. Strahlungsdetektoren synchron zu den lackierten Bauteilen durch die Messzelle bewegen, um eine Relativbewegung zwischen den lackierten Bauteilen einerseits und den Strahlungsdetektoren bzw. Strahlungsquellen andererseits während des Messvorgang zu vermeiden.

Es besteht jedoch alternativ auch die Möglichkeit, dass die Strahlungsquellen bzw. Strahlungsdetektoren in der Messzelle entlang des Transportweges nicht Verseheben werden. Bei einem kontinuierlichen Transport der lackierten Bauteile durch die Messzelle wird die Relativbewegung zwischen den lackierten Bauteilen einerseits und den Strahlungsdetektoren bzw. Strahlungsquellen andererseits dann von einem Bildverarbeitungsrechner herausgerechnet, um eine aussagefähige Messung zu ermöglichen.

Weiterhin besteht auch die Möglichkeit, dass der Strahlungsdetektor (z.B. Infrarotkamera) so schnell messen kann, dass eine Kompensation der Relativbewegung durch Mitfahren oder mittels Bildverarbeitung überflüssig ist.

Bei der Bestrahlung der lackierten Oberflächen durch eine Blitzlampe oder eine Gasentladungslampe besteht die Möglichkeit, dass ein in der Lackieranlage angeordneter Brandsensor auf die Bestrahlung anspricht, so dass fälschlicherweise ein Brand detektiert wird. Es ist deshalb vorzugsweise vorgesehen, eine Branddetektion zu sperren, solange die Strahlungsquelle die lackierten Bauteile zu Messzwecken bestrahlt. Die erfindungsgemäße Lackieranlage kann also eine Brandschutzanlage aufweisen mit mindestens einem Brandsensor, mindestens einer Löscheinrichtung und einer ersten Steuereinheit, wobei die erste Steuereinheit eingangsseitig mit dem Brandsensor verbunden ist, um einen Brand zu erkennen, während die erste Steuereinheit ausgangsseitig mit der Löscheinrichtung verbunden ist, um die Löscheinrichtung zu aktivieren. Die erste Steuereinheit detektiert hierbei, ob die Strahlungsquelle die lackierten Bauteile bestrahlt und sperrt die Aktivierung der Löscheinrichtung unabhängig von dem Signal des Brandsensors, solange die Strahlungsquelle die lackierten Bauteile bestrahlt.

Darüber hinaus weist die Messzelle bei der erfindungsgemäßen Lackieranlage einen Einlauf und einen Auslauf auf, wobei die lackierten Bauteile auf dem Transportweg über den Einlauf in die Messzelle hinein und über den Auslauf aus der Messzelle heraus transportiert werden. Vorteilhaft ist es hierbei, wenn der Einlauf und/oder der Auslauf der Messzelle einen veränderbaren Öffnungsquerschnitt aufweisen, um den Öffnungsquerschnitt an den tatsächlichen, veränderlichen Querschnitt der lackierten Bauteile anzupassen. Zum Einen erfolgt die Querschnittsanpassung so, dass die lackierten Bauteile beim Durchtritt durch den Einlauf bzw. den Auslauf nicht berührt werden. Zum Anderen erfolgt die Steuerung des Öffnungsquerschnitts so, dass ein minimaler lichter Spalt zwischen dem Öffnungsquerschnitt und der Außenkontur des jeweiligen Bauteils verbleibt. Dies ist vorteilhaft, um einen Austritt der Strahlung aus der Messzelle zu vermeiden, da beispielsweise Blitzlicht störend ist und Brandsensoren außerhalb der Messzelle aktivieren könnte.

Die Messzelle weist deshalb vorzugsweise eine Zustellvorrichtung auf, die den Öffnungsquerschnitt des Einlaufs und/oder des Auslaufs der Messzelle entsprechend dem tatsächlichen Querschnitt der lackierten Bauteile einstellt, wobei die Zustellvorrichtung von einer zweiten Steuereinheit entsprechend dem vorgegebenen Querschnitt der lackierten Bauteile ansteuert.

Der tatsächliche Querschnitt bzw. die tatsächliche Außenkontur der ein- bzw. auslaufenden Bauteile kann beispielsweise von einem oder mehreren Abstandssensoren oder von einem sogenannten Lichtgitter ermittelt werden, wobei es sich um eine Vielzahl von Lichtschranken handelt, die rechtwinklig zueinander angeordnet sind. Eine Kombination aus Lichtschranken und Abstandssensoren ist ebenfalls denkbar.

Alternativ besteht im Rahmen der Erfindung auch die Möglichkeit, dass der tatsächliche Querschnitt der ein- bzw. auslaufenden Bauteile von einer Anlagensteuerung übermittelt wird.

Ferner besteht im Rahmen der Erfindung auch die Möglichkeit, dass die Messzelle einlaufseitig und/oder auslaufseitig ein Rolltor aufweist, um die Messzelle während eines Messvorgangs zu verschließen.

Ferner ist es vorteilhaft, wenn die Strahlungsquelle eine Blende aufweist, welche die Strahlung auf die zu vermessende Bauteiloberfläche beschränkt, wobei die Blende reflektierende Innenflächen aufweisen kann, um die Strahlung auf die Messfläche zu fokussieren.

In der erfindungsgemäßen Lackieranlage können entlang dem Transportweg hintereinander mehrere Lackierzellen angeordnet sein, die auf die einzelnen Bauteile nacheinander mehrere übereinander liegende Lackschichten auftragen. Hierbei kann hinter jeder der Lackierzellen jeweils eine Messzelle zur Schichtdickenmessung angeordnet sein, so dass die Schichtdicken der einzelnen Lackschichten ermittelt werden kann. Die einzelnen Schichtdicken lassen sich jedoch in der Regel nicht unabhängig voneinander ermitteln, was auch dann gilt, wenn nach jedem einzelnen Lackauftrag gemessen wird. Das Messsystem misst deshalb in der Regel immer die Gesamtschicht der aufgebrachten Lackschichten. Aus den gemessenen Gesamtdicken lässt sich dann die Schichtdicke der einzelnen Lackschichten berechnen.

Es besteht jedoch alternativ auch die Möglichkeit, eine Messzelle mit einem Schichtdickenmessgerät einzusetzen, das die einzelnen Schichten eines mehrlagigen Schichtaufbaus selektiv vermessen kann. In diesem Fall reicht es aus, wenn am Ende des Lackierprozesses, d.h. in Förderichtung hinter sämtlichen Lackierzellen, eine einzige Messzelle angeordnet ist. Dies schließt jedoch nicht aus, auch dann noch mehrere Messstationen einzusetzen, um schnell auf Fehler im Lackierprozess reagieren zu können.

Weiterhin ist es im Rahmen der Erfindung möglich, dass die ermittelte Schichtdicke als Regelgröße in einem Regelkreis verwendet wird, um die Applikationssteuerung entsprechend nachzuregeln und damit für eine möglichst konstante Schichtdicke zu sorgen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Zeichnungen näher erläutert. Es zeigen:
- Figur 1: eine schematische Darstellung einer erfindungsgemäßen Lackieranlage mit zwei Lackierzellen und zwei Messzellen,
- Figur 2: eine Querschnittsansicht der Messzelle der Lackieranlage gemäß Figur 1,
- Figur 3: ein abgewandeltes Ausführungsbeispiel der Messzelle in einer Querschnittsansicht,
- Figur 4: ein weiteres mögliches Ausführungsbeispiel der Messzelle in einer Querschnittsansicht rechtwinklig zu dem Transportweg,
- Figuren 5A und 5B: Querschnittsansichten des Einlaufs der Messzelle,
- Figur 6: einen Regelkreis zur Nachregelung der Applikationssteuerung in Abhängigkeit von der ermittelten Schichtdicke sowie
- Figur 7: eine schematische Darstellung einer integrierten Feuerlöscheinrichtung.

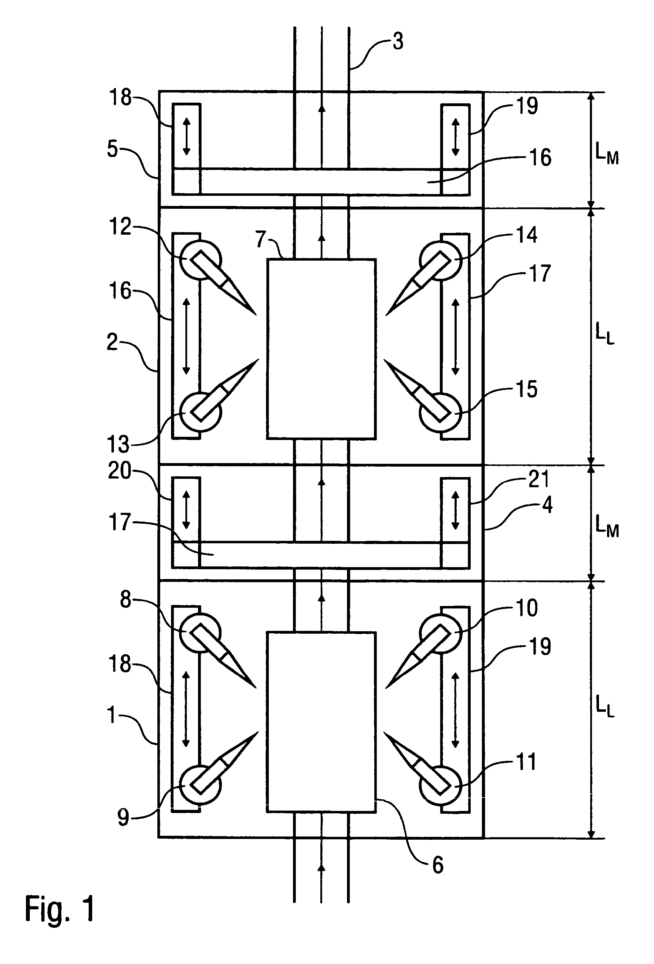

Figur 1 zeigt eine schematische, stark vereinfachte Darstellung einer erfindungsgemäßen Lackieranlage mit zwei Lackierzellen 1, 2, die entlang einem Transportweg 3 hintereinander angeordnet sind, wobei hinter jeder der beiden Lackierzellen 1, 2 jeweils eine Messzelle 4, 5 zur Schichtdickenmessung angeordnet ist. Die Messzelle 4 misst also die Schichtdicke der von der Lackierzelle 1 aufgebrachten Lackschicht, wohingegen die Messzelle 5 die Schichtdicke der von der Lackzelle 2 aufgebrachten Lackschicht misst.

Auf dem Transportweg 3 werden Kraftfahrzeugkarosserien 6, 7 durch die Lackieranlage transportiert, wobei der Transport wahlweise kontinuierlich oder im "Stop-and-Go"-Betrieb erfolgen kann. Bei einem "Stop-and-Go"-Betrieb müssen die einzelnen Lackierzellen 1, 2 jeweils die komplettem Kraftfahrzeugkarosserien 6, 7 aufnehmen.

In den beiden Lackierzellen 1, 2 sind jeweils mehrere mehrachsige Lackierroboter 8-11 bzw. 12-15 angeordnet, wobei die Lackierroboter 8-11 bzw. 12-15 auf Verfahrschienen 16-19 entlang dem Transportweg 3 verfahrbar sind, was an sich aus dem Stand der Technik bekannt ist und deshalb nicht näher beschrieben werden muss.

In den Messzellen 4, 5 befindet sich jeweils eine Portalmaschine 16, 17, die den Transportweg 3 überspannt und auf Verfahrschienen 18, 19 bzw. 20, 21 entlang dem Transportweg 3 verfahrbar ist.

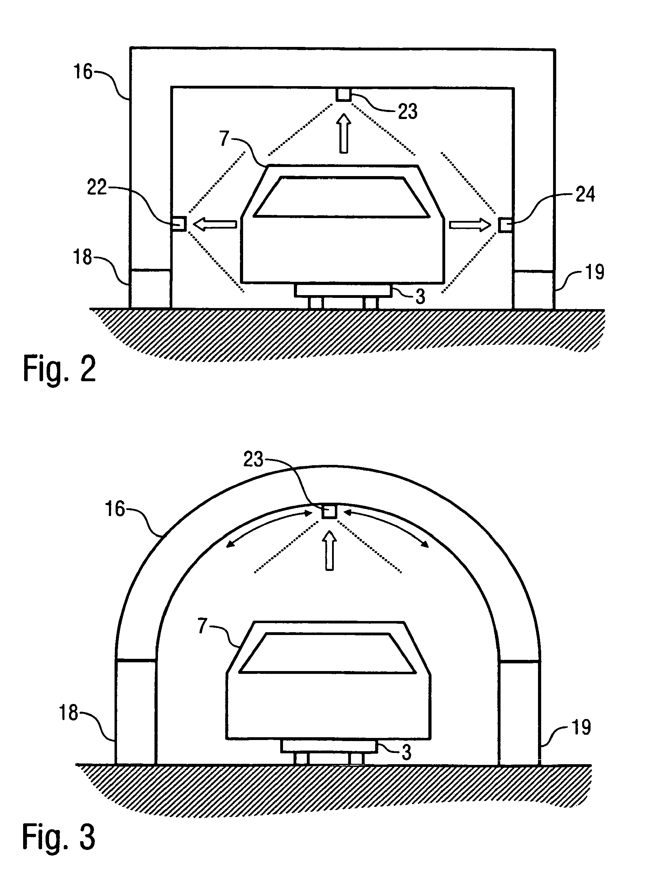

Aus der Querschnittsansicht in Figur 2 ist ersichtlich, dass die Portalmaschine 16 insgesamt drei Schichtdickenmessgeräte 22-24 trägt, um die Schichtdicke des auf die Kraftfahrzeugkarosserie 7 aufgebrachten Lacks zu messen.

Die Schichtdickenmessgeräte 22 und 24 sind hierbei an aufragenden Pfosten der Portalmaschine 16 innen angebracht und vermessen die Schichtdicke auf den Seitenflächen der Kraftfahrzeugkarosserie 7.

Das Schichtdickenmessgerät 23 ist dagegen über dem Transportweg 3 oberhalb der zu vermessenden Kraftfahrzeugkarosserie 7 angebracht und vermisst von oben die Dachflächen und Haubenflächen der Kraftfahrzeugkarosserie 7.

Die einzelnen Schichtdickenmessgeräte 22-24 enthalten als Strahlungsquelle jeweils eine Blitzlampe und als Strahlungsdetektor jeweils eine Infrarotkamera, welche die Karosserie 7 weitwinklig und großflächig vermisst und ein zweidimensionales Schichtdickenbild liefert.

Figur 3 zeigt eine Querschnittsansicht eines alternativen Ausführungsbeispiels der Portalmaschine 16, wobei dieses Ausführungsbeispiel teilweise mit dem vorstehend beschriebenen Ausführungsbeispiel übereinstimmt, so dass zur Vermeidung von Wiederholungen auf die vorstehende Beschreibung verwiesen wird und dieselben Bezugszeichen verwendet werden.

Eine Besonderheit dieses Ausführungsbeispiels besteht darin, dass das Schichtdickenmessgerät 23 das einzige Schichtdickenmessgerät ist, wobei das Schichtdickenmessgerät 23 bogenförmig entlang der Portalmaschine 16 um die zu vermessende Kraftfahrzeugkarosserie 7 herum gefahren werden kann, um die Kraftfahrzeugkarosserie 7 aus verschiedenen Perspektiven zu vermessen. In der in Figur 3 dargestellten Position vermisst das Schichtdickenmessgerät 23 beispielsweise die Dachflächen und die Haubenflächen der Kraftfahrzeugkarosserie 7.

Zur Vermessung der Seitenflächen der Kraftfahrzeugkarosserie 7 wird das Schichtdickenmessgerät 23 dagegen entlang der bogenförmigen Portalmaschine 16 an die Seite der Kraftfahrzeugkarosserie 7 gefahren.

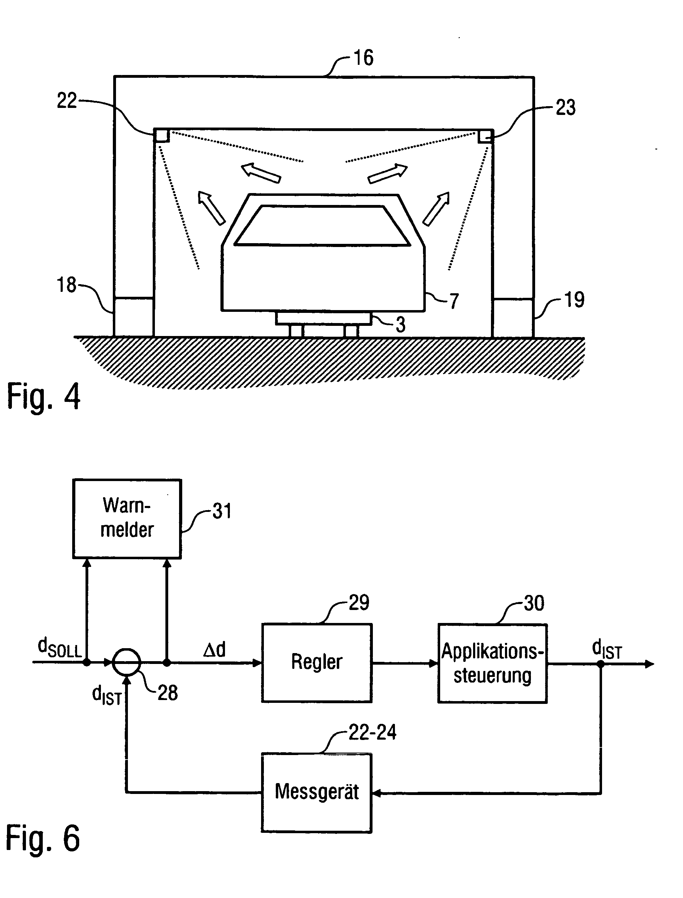

Figur 4 zeigt ein weiteres Ausführungsbeispiel der Portalmaschine 16, das teilweise mit den vorstehend beschriebenen Ausführungsbeispielen übereinstimmt, so dass zur Vermeidung von Wiederholungen auf die vorstehende Beschreibung verwiesen wird, wobei für entsprechende Einzelheiten im Folgenden dieselben Bezugszeichen verwendet werden.

Eine Besonderheit dieses Ausführungsbeispiels besteht darin, dass die beiden Schichtdickenmessgeräte 22, 23 jeweils an den beiden gegenüberliegenden oberen Ecken der Portalmaschine 16 angeordnet sind, so dass die beiden Schichtdickenmessgeräte 22 jeweils die Dach- und Haubenflächen und die jeweils zugewandte Seitenfläche der Kraftfahrzeugkarosserie 7 vermessen können.

Gemeinsam ist den vorstehenden Ausführungsbeispielen, dass die Portalmaschine 16 auf den Fahrschienen 18, 19 während einer Messung entlang dem Transportweg 3 synchron zu der vermessenden Kraftfahrzeugkarosserie 7 verfahren wird, so dass die Schichtdickenmessgeräte 22-24 einerseits und die zu vermessende Kraftfahrzeugkarosserie 7 andererseits eine konstante Relativposition zu einander entlang dem Transportweg 3 einhalten, was für eine aussagekräftige Messung wichtig ist.

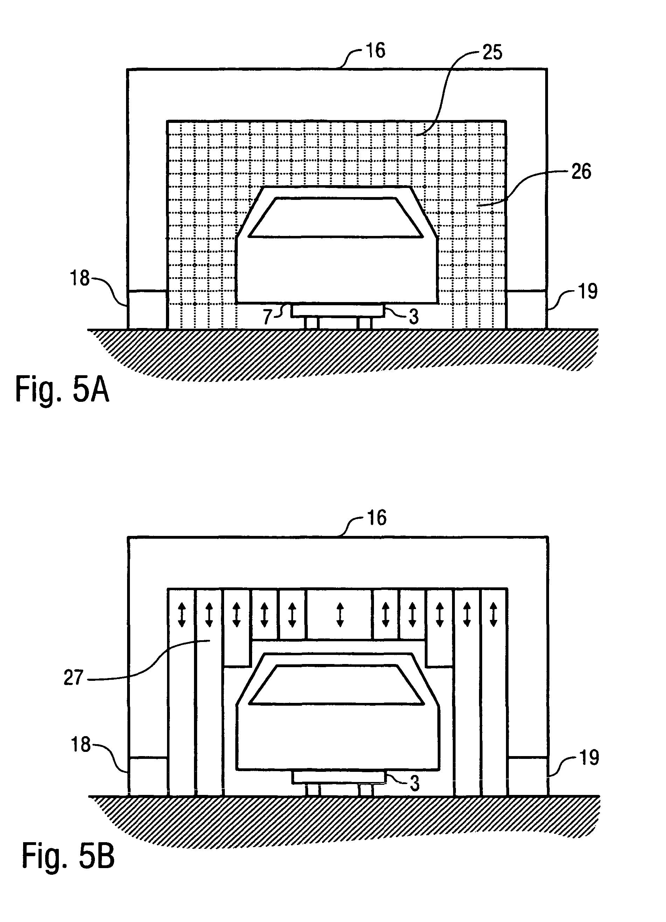

Die Figuren 5A und 5B zeigen den Einlauf der Messzelle 5. Daraus ist ersichtlich, dass im Einlauf der Messzelle 5 ein sogenanntes Lichtgitter angeordnet ist, das aus waagerecht verlaufenden Lichtschranken 25 und senkrecht verlaufenden Lichtschranken 26 besteht und den Querschnitt bzw. die Kontur der zu vermessenden Kraftfahrzeugkarosserie 7 ermittelt.

In Abhängigkeit von der ermittelten Kontur der einlaufenden Kraftfahrzeugkarosserie 7 wird dann der Öffnungsquerschnitt des Einlaufs der Messzelle 5 so eingestellt, dass einerseits eine Berührung der lackierten Kraftfahrzeugkarosserie 7 vermieden wird, aber andererseits der verbleibende lichte Spalt zwischen dem Öffnungsquerschnitt des Einlaufs und der Außenkontur der einlaufenden Kraftfahrzeugkarosserie 7 möglichst klein ist. Dies ist sinnvoll, damit kein störendes Blitzlicht aus der Messzelle 5 austritt.

Der Einlauf der Messzelle 5 weist deshalb mehrere Vorhangelemente 27 auf, die in Pfeilrichtung unabhängig voneinander heruntergelassen werden können, um die gewünschte Querschnittsanpassung des Einlaufs zu erzielen.

Figur 6 zeigt einen Regelkreis mit einem der Schichtdickenmessgeräte 22-24, das einen Ist-Wert d_{IST} der Lackschicht auf der Kraftfahrzeugkarosserie 6 bzw. 7 misst.

Der Ist-Wert d_{IST} wird einem Subtrahierer 28 zugeführt, der aus dem Ist-Wert d_{IST} und einem vorgegebenen Soll-Wert d_{SOLL} der Schichtdicke eine Soll-Ist-Abweichung Δd ermittelt.

Die Soll-Ist-Abweichung Δd wird dann einem Regler 29 zugeführt, der eine Applikationssteuerung 30 in Abhängigkeit von der Soll-Ist-Abweichung ansteuert, um eine möglichst konstante Einhaltung des vorgegebenen Soll-Werts d_{SOLL}der Schichtdicke zu erreichen.

Darüber hinaus werden der Soll-Wert D_{IST} und die Soll-Ist-Abweichung Δd einem Warnmelder 31 zugeführt, der ein Warnsignal ausgibt, wenn die Soll-Ist-Abweichung Δd zu groß wird. Hierbei wird auch der vorgegebene Soll-Wert d_{SOLL} berücksichtigt, da der Warnmelder 31 ein Warnsignal ausgibt, wenn die Soll-Ist-Abweichung Δd einen vorgegebenen Prozentwert des Soll-Werts d_{SOLL} überschreitet.

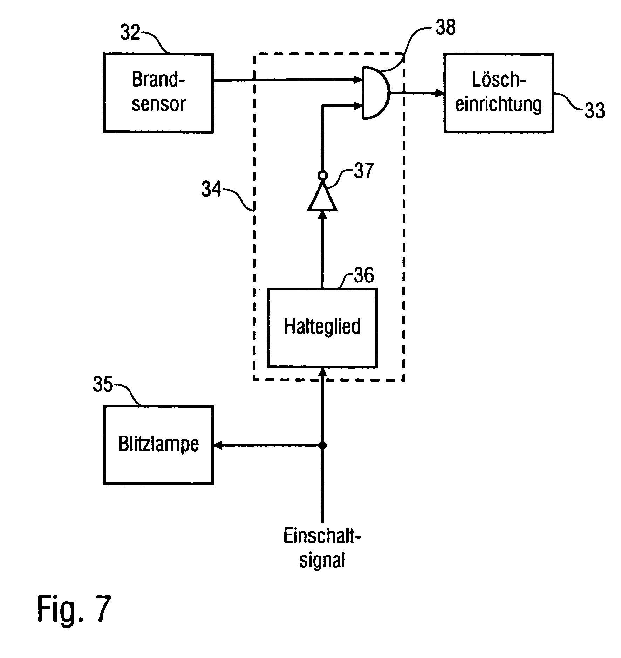

Schließlich zeigt Figur 7 schematisch und in stark vereinfachter Form eine Feuerlöscheinrichtung, die in die Messzellen 4, 5 integriert sein kann.

Die Feuerlöscheinrichtung besteht aus mindestens einem Brandsensor 32, mindestens einer Löscheinrichtung 33 und einer Steuereinheit 34, wobei die Steuereinheit in Abhängigkeit von dem Ausgangssignal des Brandsensors die Löscheinrichtung 33 ansteuert.

Hierbei wird eine Blitzlampe 35 von einem Einschaltsignal während der Schichtdickenmessung eingeschaltet. Problematisch ist hierbei, dass die von der Blitzlampe 35 abgegebene Strahlung zu einer Fehlauslösung des Brandsensors 32 führen kann, was vermieden werden muss. Das Einschaltsignal für die Blitzlampe 35 wird deshalb auch der Steuereinheit 34 zugeführt, welche während der Einschaltzeit der Blitzlampe 35 eine Aktivierung der Löscheinrichtung 33 sperrt.

Hierzu weist die Steuereinheit 34 eingangsseitig ein Halteglied 36 auf, wobei das Halteglied 36 ausgangsseitig das Einschaltsignal für die Blitzlampe 35 solange hält, bis die von der Blitzlampe 35 abgegebene Strahlungsleistung soweit abgeklungen ist, dass eine Fehlauslösung des Brandsensors 32 sicher ausgeschlossen ist. Das Ausgangssignal des Halteglieds 36 wird dann über einen Inverter 37 zu einem Und-Glied 38 geführt, das eingangsseitig auch von dem Brandsensor 32 angesteuert wird. Die Steuereinheit 34 aktiviert die Löscheinrichtung 33 also nur dann, wenn der Brandsensor 32 einen Brand detektiert und wenn gleichzeitig der Inverter 37 einen Low-Pegel an das Und-Glied 38 liefert, was nur der Fall ist, wenn keine Fehlauslösung durch die Blitzlampe 35 droht.

### Bezugszeichenliste:

- 1, 2: Lackierzelle
- 3: Transportweg
- 4, 5: Messzelle
- 6, 7: Kraftfahrzeugkarosserie
- 8-15: Lackierroboter
- 16, 17: Portalmaschinen
- 18-21: Verfahrschienen
- 22-24: Schichtdickenmessgeräte
- 25, 26: Lichtschranken
- 27: Vorhangelemente
- 28: Subtrahierer
- 29: Regler
- 30: Applikationssteuerung
- 31: Warnmelder
- 32: Brandsensor
- 33: Löscheinrichtung
- 34: Steuereinheit
- 35: Blitzlampe
- 36: Halteglied
- 37: Inverter
- 38: UND-Glied

## Patentansprüche

1. Lackieranlage zur serienweisen Lackierung von Bauteilen (6, 7), insbesondere von Kraftfahrzeugkarosserien, mit
a) mindestens einer Lackierzelle (1, 2), in der die Bauteile (6, 7) mit einem Lack mit einer bestimmten Schichtdicke (d_{IST}) beschichtet werden,
b) mindestens einer Messzelle (4, 5) zur Messung der Schichtdicke (D_{IST}) des Lacks auf den Bauteilen (6, 7) mittels mindestens einer Strahlungsquelle (22-24; 35) zur Bestrahlung der beschichteten Bauteile (6, 7) und mit mindestens einem Strahlungsdetektor (22-24) zur Erfassung der von den bestrahlten Bauteilen (6, 7) reflektierten Strahlung, um daraus die Schichtdicke (d_{IST}) zu ermitteln, sowie mit
c) einem Transportweg (3), entlang dem die zu lackierenden Bauteile (6, 7) durch die Lackierzelle (1, 2) und anschließend durch die Messzelle (4, 5) transportiert werden,
d) wobei die Strahlungsquelle (22-24; 35) die zu vermessenden Oberflächen der lackierten Bauteile (6, 7) flächig bestrahlt, und
e) der Strahlungsdetektor (22-24) die zu vermessenden Oberflächen der lackierten Bauteile (6, 7) flächig vermisst,
**dadurch gekennzeichnet,**
f) **dass** die mindestens eine Strahlungsquelle (22-24; 35) und der mindestens eine Strahlungsdetektor (22-24) in der Messzelle (4, 5) auf einer Portalmaschine (16, 17) angeordnet sind, die den Transportweg (3) überspannt und entlang des Transportweges verfahrbar ist.

2. Lackieranlage nach Anspruch 1, **dadurch gekennzeichnet,**
a) **dass** die Strahlungsquelle (22-24; 35) der Messzelle (4, 5) eine Blitzlampe (35) oder eine Gasentladungslampe ist, und/oder
b) **dass** der Strahlungsdetektor (22-24) eine Infrarotkamera ist, und/oder
c) **dass** die Strahlungsquelle (22-24; 35) der Messzelle (4, 5) Licht im sichtbaren Wellenlängenbereich abstrahlt.

3. Lackieranlage nach einem der vorhergehenden Ansprüche, **dadurch gekennzeichnet,**
a) **dass** der Strahlungsdetektor (22-24) die Schichtdicke auf den lackierten Bauteile (6, 7) in einem einzigen Messvorgang über eine bestimmte Messfläche vermisst, wobei die Messfläche größer ist als 10cm², 50cm², 100cm², 250cm², 500cm², 1000cm², 1m² oder 2m², oder
b) **dass** der Strahlungsdetektor (22-24) die Schichtdicke auf den lackierten Bauteilen (6, 7) punktweise, zeilenweise und/oder reihenweise abtastet.

4. Lackieranlage nach einem der vorhergehenden Ansprüche, **dadurch gekennzeichnet, dass** die Messzelle (4, 5) und die Lackierzelle (1, 2) entlang dem Transportweg (3) jeweils eine bestimmte Zonenlänge (L_{M}, L_{L}) aufweisen, wobei die Zonenlänge (L_{M}) der Messzelle (4, 5)
a) kleiner ist als die Zonenlänge (L_{L}) der Lackierzelle (1, 2), und/oder
b) kleiner als 7m, 5m, 3m, 2m oder 1m ist.

5. Lackieranlage nach einem der vorhergehenden Ansprüche, **dadurch gekennzeichnet,**
a) **dass** in der Messzelle (4, 5) eine Führung (16) für den Strahlungsdetektor angeordnet ist, so dass der Strahlungsdetektor (23) in vertikaler und/oder lateraler Richtung verschiedene Relativpositionen bezüglich der lackierten Bauteile (6, 7) einnehmen kann, und/oder
b) **dass** in der Messzelle (4, 5) nur ein einziger Strahlungsdetektor (23) vorgesehen ist.

6. Lackieranlage nach einem der Ansprüche 1 bis 4,
**dadurch gekennzeichnet,**
a) **dass** die zu lackierenden Bauteile (6, 7) jeweils mehrere Teilflächen aufweisen, die zueinander angewinkelt sind, insbesondere Seitenflächen, Dachflächen, Haubenflächen, Frontflächen und Heckflächen,
b) **dass** der Strahlungsdetektor 22, 23) von einer Position aus jeweils mehrere der Teilflächen ausmessen kann,
c) **dass** in der Messzelle (4, 5) eine Führung (16) für den Strahlungsdetektor (22-24) angeordnet ist, so dass der Strahlungsdetektor (22-24) in lateraler und/oder vertikaler Richtung verschiedene Relativpositionen bezüglich der lackierten Bauteile (6, 7) einnehmen kann, und/oder
d) **dass** in der Messzelle (4, 5) genau zwei Strahlungsdetektoren (22, 23) vorgesehen sind.

7. Lackieranlage nach einem der Ansprüche 1 bis 4,
**dadurch gekennzeichnet,**
a) **dass** in der Messzelle (4, 5) mindestens drei Strahlungsdetektoren (22-24) vorgesehen sind,
b) **dass** die Strahlungsdetektoren (22-24) in der Messzelle (4, 5) in vertikaler und in lateraler Richtung ortsfest angeordnet sind,
c) **dass** zwei der Strahlungsdetektoren (22, 24) seitlich neben dem Transportweg (3) auf verschiedenen Seiten angeordnet sind und die Strahlung messen, die von den Seitenflächen der lackierten Bauteile (6, 7) reflektiert wird, und/oder
d) **dass** einer der Strahlungsdetektoren (23) über dem Transportweg (3) angeordnet ist und die Strahlung misst, die von waagerechten Flächen, insbesondere von den Dachflächen und Haubenflächen, der lackierten Bauteile (6, 7) reflektiert wird.

8. Lackieranlage nach einem der vorhergehenden Ansprüche, **dadurch gekennzeichnet,**
a) **dass** die Portalmaschine (16, 17) entlang des Transportweges (3) durch eine steuerbare Verschiebevorrichtung verschiebbar ist, und
b) **dass** die Verschiebevorrichtung (17-20) von einer Anlagensteuerung so angesteuert wird, dass sich die Strahlungsquelle (22-24; 35) und/oder der Strahlungsdetektor (22-24) synchron zu den lackierten Bauteilen (6, 7) und in einer konstanten Relativposition in Bezug auf die lackierten Bauteile (6, 7) entlang dem Transportweg (3) bewegt.

9. Lackieranlage nach einem der Ansprüche 1 bis 7,
**dadurch gekennzeichnet,**
**dass** der Strahlungsdetektor (22-24; 35) mit einem Bildverarbeitungsrechner verbunden ist, der die Relativbewegung zwischen den lackierten Bauteilen (6, 7) und dem Strahlungsdetektor (22-24) herausrechnet.

10. Lackieranlage nach einem der vorhergehenden Ansprüche, **dadurch gekennzeichnet,**
a) **dass** eine Brandschutzanlage (32-38) mit mindestens einem Brandsensor (32), mindestens einer Löscheinrichtung (33) und einer ersten Steuereinheit (34) vorgesehen ist, wobei die erste Steuereinheit (34) eingangsseitig mit dem Brandsensor (32) verbunden ist, um einen Brand zu erkennen, während die erste Steuereinheit (34) ausgangsseitig mit der Löscheinrichtung (33) verbunden ist, um die Löscheinrichtung (33) im Brandfall zu aktivieren, und
b) **dass** die erste Steuereinheit (34) detektiert, ob die Strahlungsquelle (35) die lackierten Bauteile (6, 7) bestrahlt, unddass die erste Steuereinheit (34) die Aktivierung der Löscheinrichtung (33) sperrt, solange die Strahlungsquelle (35) die lackierten Bauteile (6, 7) bestrahlt.

11. Lackieranlage nach einem der vorhergehenden Ansprüche, **dadurch gekennzeichnet,**
a) **dass** die Messzelle (4, 5) einen Einlauf aufweist, über den die lackierten Bauteile (6, 7) auf dem Transportweg (3) in die Messzelle (4, 5) hinein transportiert werden, wobei der Einlauf vorzugsweise mit einem Rolltor verschließbar ist,
b) **dass** die Messzelle (4, 5) einen Auslauf aufweist, über den die lackierten Bauteile (6, 7) auf dem Transportweg (3) aus der Messzelle (4, 5) heraus transportiert werden, wobei der Auslauf vorzugsweise mit einem Rolltor verschließbar ist,
c) **dass** der Einlauf und/oder der Auslauf der Messzelle (4, 5) einen veränderbaren Öffnungsquerschnitt aufweist, um den Öffnungsquerschnitt an den Querschnitt der lackierten Bauteile (6, 7) anzupassen.

12. Lackieranlage nach Anspruch 11, **gekennzeichnet durch**
a) eine Zustellvorrichtung (27), die den Öffnungsquerschnitt des Einlaufs und/oder des Auslaufs der Messzelle (4, 5) entsprechend dem Querschnitt der lackierten Bauteile (6, 7) einstellt, und
b) eine zweite Steuereinheit, welche die Zustellvorrichtung (27) entsprechend dem vorgegebenen Querschnitt der lackierten Bauteile (6, 7) ansteuert, und
c) einen mit der zweiten Steuereinheit verbundenen Abstandssensor oder ein Lichtgitter (25, 26) zur Ermittlung des Querschnitts der lackierten Bauteile (6, 7), wobei die zweite Steuereinheit mit der Anlagensteuerung verbunden ist und von der Anlagensteuerung die gespeicherten Querschnitte der einlaufenden Bauteile (6, 7) erhält.

13. Lackieranlage nach einem der vorhergehenden Ansprüche, **dadurch gekennzeichnet,**
a) **dass** die Strahlungsquelle (22-24; 35) eine Blende aufweist, welche die Strahlung auf die zu vermessende Bauteiloberfläche beschränkt, und
b) **dass** die Blende reflektierende Innenflächen aufweist, und/oder
c) **dass** entlang dem Transportweg (3) hintereinander mehrere Lackierzellen (1, 2) angeordnet sind, und
d) **dass** hinter jeder der Lackierzellen (1, 2) jeweils eine Messzelle (4, 5) zur Schichtdickenmessung angeordnet ist.

14. Lackieranlage nach einem der vorhergehenden Ansprüche, **gekennzeichnet durch** einen Regelkreis, der
a) als Regelgröße die Schichtdicke (d_{IST}) des applizierten Lacks in der Messzelle (4, 5) auf den Bauteilen (6, 7) misst,
b) die gemessene Schichtdicke (D_{IST}) mit einem vorgegebenen Soll-Wert (d_{SOLL}) der Schichtdicke vergleicht und eine Soll-Ist-Abweichung (Δd) ermittelt, und
c) eine Applikationseinrichtung (30) in der Lackierzelle (1, 2) mittels eines Reglers (29) entsprechend der Soll-Ist-Abweichung (Δd) der Schichtdicke ansteuert.

## Claims

1. Painting installation for the serial painting of components (6, 7), in particular of motor vehicle bodies, with
a) at least one painting cell (1, 2), in which the components (6, 7) are coated with a paint with a certain layer thickness (d_{ACT}),
b) at least one measuring cell (4, 5) for measuring the layer thickness (d_{ACT}) of the paint on the components (6, 7) by means of at least one radiation source (22-24; 35) for irradiating the coated components (6, 7) and with at least one radiation detector (22-24) for detecting the radiation reflected by the irradiated components (6, 7), in order to determine the layer thickness (d_{ACT}) therefrom, and also with
c) a transport path (3), along which the components (6, 7) to be painted are transported through the painting cell (1, 2) and subsequently through the measuring cell (4, 5),
d) wherein the radiation source (22-24; 35) irradiates the surfaces of the painted components (6, 7) to be measured in a two-dimensional manner, and
e) the radiation detector (22-24) measures the surfaces of the painted components (6, 7) to be measured in a two-dimensional manner,
**characterized in that**
f) the at least one radiation source (22-24; 35) and the at least one radiation detector (22-24) in the measuring cell (4, 5) are arranged on a portal machine (16, 17), which spans the transport path (3) and which is movable along the transport path (3).

2. Painting installation according to Claim 1, **characterized in that**
a) the radiation source (22-24; 35) of the measuring cell (4, 5) is a flashgun (35) or a gas discharge lamp, and/or
b) the radiation detector (22-24) is an infra-red camera, and/or
c) the radiation source (22-24; 35) of the measuring cell (4, 5) radiates light in the visible wavelength range.

3. Painting installation according to any one of the preceding claims, **characterized in that**
a) the radiation detector (22-24) measures the layer thickness on the painted components (6, 7) in a single measurement procedure over a certain measurement area, wherein the measurement area is larger than 10cm², 50cm², 100cm², 250cm², 500cm², 1000cm², 1m² or 2m², or
b) the radiation detector (22-24) scans the layer thickness on the painted components (6, 7) point by point, in columns or in rows.

4. Painting installation according to any one of the preceding claims, **characterized in that** the measuring cell (4, 5) and the painting cell (1, 2) have a certain zone length (L_{M}, L_{L}) along the transport path (3) in each case, wherein the zone length (L_{M}) of the measuring cell (4, 5)
a) is smaller than the zone length (L_{L}) of the painting cell (1, 2), and/or
b) is smaller than 7m, 5m, 3m, 2m or 1m.

5. Painting installation according to any one of the preceding claims, **characterized in that**
a) a guide (16) for the radiation detector is arranged in the measuring cell (4, 5), so that the radiation detector (23) can take up various relative positions in the vertical and/or lateral direction with respect to the painted components (6, 7), and/or
b) only a single radiation detector (23) is provided in the measuring cell (4, 5).

6. Painting installation according to any one of Claims 1 to 4, **characterized in that**
a) the components (6, 7) to be painted in each case have a plurality of part areas, which are at an angle with respect to one another, in particular side areas, roof areas, bonnet areas, front areas and rear areas,
b) the radiation detector (22, 23) can measure a plurality of the part areas from one position in each case,
c) a guide (16) for the radiation detector (22-24) is arranged in the measuring cell (4, 5), so that the radiation detector (22-24) can take up various relative positions in the lateral and/or vertical direction with respect to the painted components (6, 7), and/or
d) exactly two radiation detectors (22, 23) are provided in the measuring cell (4, 5).

7. Painting installation according to any one of Claims 1 to 4, **characterized in that**
a) at least three radiation detectors (22-24) are provided in the measuring cell (4, 5),
b) the radiation detectors (22-24) in the measuring cell (4, 5) are arranged in a stationary manner in the vertical and lateral direction,
c) two of the radiation detectors (22, 24) are arranged laterally next to the transport path (3) on various sides and measure the radiation, which is reflected by the side areas of the painted components (6, 7), and/or
d) one of the radiation detectors (23) is arranged over the transport path (3) and measures the radiation, which is reflected by horizontal areas, in particular by the roof areas and bonnet areas, of the painted components (6, 7).

8. Painting installation according to any one of the preceding Claims, **characterized in that**
a) the portal machine (16, 17) can be moved along the transport path (3) by means of a controllable displacement device, and
b) the displacement device (17-20) is preferably controlled by a system control in such a manner that the radiation source (22-24; 35) and/or the radiation detector (22-24) moves along the transport path (3) synchronously to the painted components (6, 7) and in a constant relative position with respect to the painted components (6, 7).

9. Painting installation according to any one of Claims 1 to 7, **characterized in that** the radiation detector (22-24; 35) is connected to an image processing computer, which subtracts the relative movement between the painted components (6, 7) and the radiation detector (22-24).

10. Painting installation according to any one of the preceding claims, **characterized in that**
a) a fire protection system (32-38) with at least one fire sensor (32), at least one extinguishing device (33) and a first control unit (34) is provided, wherein the first control unit (34) is connected at an input side to the fire sensor (32) in order to detect a fire, whilst the first control unit (34) is connected at an output side to the extinguishing device (33), in order to activate the extinguishing device (33) in the event of fire, and
b) the first control unit (34) detects whether the radiation source (35) is irradiating the painted components (6, 7), and the first control unit (34) blocks the activation of the extinguishing device (33) as long as the radiation source (35) is irradiating the painted components (6, 7).

11. Painting installation according to any one of the preceding claims, **characterized in that**
a) the measuring cell (4, 5) has an inlet, via which the painted components (6, 7) are transported into the measuring cell (4, 5) on the transport path (3), wherein the inlet can preferably be closed with a rolling shutter gate,
b) the measuring cell (4, 5) has an outlet, via which the painted components (6, 7) are transported out of the measuring cell (4, 5) on the transport path (3), the outlet of the measuring cell (4, 5) can preferably be closed with a rolling shutter gate,
c) the inlet and/or the outlet of the measuring cell (4, 5) has a changeable opening cross section, in order to adapt the opening cross section to the cross section of the painted components (6, 7).

12. Painting installation according to Claim 11, **characterized by**
a) an infeed device (27), which sets the opening cross section of the inlet and/or the outlet of the measuring cell (4, 5) in accordance with the cross section of the painted components (6, 7), and
b) a second control unit, which controls the infeed device (27) in accordance with the predetermined cross section of the painted components (6, 7), and
c) a distance sensor connected to the second control unit or a light array (25, 26) for determining the cross section of the painted components (6, 7), wherein the second control unit is connected to the system control and obtains the saved cross sections of the components (6, 7) running in from the system control.

13. Painting installation according to any one of the preceding claims, **characterized in that**
a) the radiation source (22-24; 35) has a screen, which limits the radiation to the component surface to be measured, and
b) the screen has reflective inner areas, and/or
c) a plurality of painting cells (1, 2) are arranged one downstream of the other along the transport path (3), and
d) one measuring cell (4, 5) for layer thickness measurement is in each case arranged downstream of each of the painting cells (1, 2).

14. Painting installation according to any one of the preceding claims, **characterized by** a control loop, which
a) measures the layer thickness (d_{ACT}) of the paint applied in the measuring cell (4, 5) on the components (6, 7) as a controlled variable,
b) compares the measured layer thickness (d_{ACT}) with a predetermined set value (d_{SET}) of the layer thickness and determines a deviation (Δd) between set and actual value, and
c) controls an application device (30) in the painting cell (1, 2) by means of a controller (29) in accordance with the deviation (Δd) between set and actual value of the layer thickness.

## Revendications

1. Installation de peinture pour la peinture en série de pièces (6, 7), plus particulièrement de carrosseries de véhicules à moteur, avec
a) au moins une cellule de peinture (1, 2), dans laquelle les pièces (6, 7) sont revêtues d'une peinture avec une épaisseur de couche déterminée (d_{IST}),
b) au moins une cellule de mesure (4, 5) pour la mesure de l'épaisseur de la couche (d_{IST}) de la peinture sur les pièces (6, 7), à l'aide d'au moins une source de rayonnement (22-24 ; 35) pour l'irradiation des pièces (6, 7) à revêtir et avec au moins un détecteur de rayonnement (22-24) pour la détection du rayonnement reflété par les pièces irradiées (6, 7), afin d'en déduire l'épaisseur de la couche (d_{IST}), et avec
c) un trajet de transport (3), le long duquel les pièces (6, 7) à peindre sont transportées à travers la cellule de peinture (1, 2) puis à travers la cellule de mesure (4, 5),
d) la source de rayonnement (22-24 ; 35) irradiant les surfaces à mesurer des pièces (6, 7) à peindre, et
e) le détecteur de rayonnement (22-24) mesure les surfaces à mesurer des pièces à peindre (6, 7),
**caractérisée en ce que**
f) l'au moins une source de rayonnement (22-24 ; 35) et l'au moins un détecteur de rayonnement (22-24) sont disposés dans la cellule de mesure (4, 5) sur une machine à portail (16, 17) qui enjambe le trajet de transport (3) et qui est mobile le long du trajet de transport.

2. Installation de peinture selon la revendication 1, **caractérisée en ce que**
a) la source de rayonnement (22-24 ; 35) de la cellule de mesure (4, 5) est une lampe flash (35) ou une lampe à décharge de gaz, et/ou
b) le détecteur de rayonnement (22-24) est une caméra infrarouge, et/ou
c) la source de rayonnement (22-24 ; 35) de la cellule de mesure (4, 5) émet de la lumière dans le domaine des longueurs d'ondes visibles.

3. Installation de peinture selon l'une des revendications précédentes, **caractérisée en ce que**
a) le détecteur de rayonnement (22-24) mesure l'épaisseur de la couche sur les pièces peintes (6, 7) en un seul processus de mesure sur une surface de mesure déterminée, la surface de mesure étant supérieure à 10 cm², 50 cm², 100 cm², 250 cm², 500 cm², 1000 cm², 1 m² ou 2 m², ou
b) le détecteur de rayonnement (22-24) mesure l'épaisseur de la couche sur les pièces peintes (6, 7) ponctuellement, ligne par ligne et/ou rangée par rangée.

4. Installation de peinture selon l'une des revendications précédentes, **caractérisée en ce que** la cellule de mesure (4, 5) et la cellule de mesure (1, 2) présentent, le long du trajet de transport (3) une longueur de zone déterminée (L_{M}, L_{L}), la longueur de zone (L_{M}) de la cellule de mesure (4, 5)
a) étant inférieure à la longueur de zone (L_{L}) de la cellule de peinture (1, 2), et/ou
b) étant inférieure à 7 m, 5 m, 3 m, 2 m ou 1 m.

5. Installation de peinture selon l'une des revendications précédentes, **caractérisée en ce que**
a) dans la cellule de mesure (4, 5), se trouve un guidage (16) pour le détecteur de rayonnement, de façon à ce que le détecteur de rayonnement (23) puisse prendre, dans le sens vertical et/ou latéral, différentes positions relatives par rapport aux pièces peintes (6, 7), et/ou
b) dans la cellule de mesure (4, 5), un seul détecteur de rayonnement (23) est prévu.

6. Installation de peinture selon l'une des revendications 1 à 4, **caractérisée en ce que**
a) les pièces à peindre (6, 7) présentent chacune plusieurs surfaces partielles inclinées les unes par rapport aux autres, plus particulièrement des surfaces latérales, des surfaces de toitures, des surfaces de capots, des surfaces avant et des surfaces arrière,
b) le détecteur de rayonnement (22, 23) peut mesurer plusieurs de ces surfaces partielles à partir d'une position,
c) dans la cellule de mesure (4, 5), se trouve un guidage (16) pour le détecteur de rayonnement (22-24), de façon à ce que le détecteur de rayonnement (22-24) puisse prendre, dans le sens latéral et/ou vertical, différentes positions relatives par rapport aux pièces peintes (6, 7) et/ou
d) dans la cellule de mesure (4, 5), exactement deux détecteurs de rayonnement (22, 23) sont prévus.

7. Installation de peinture selon l'une des revendications 1 à 4, **caractérisée en ce que**
a) dans la cellule de mesure (4, 5), au moins trois détecteurs de rayonnement (22-24) sont prévus,
b) les détecteurs de rayonnement (22-24) sont disposés de manière fixe dans la cellule de mesure (4, 5) dans le sens vertical et dans le sens latéral,
c) deux des détecteurs de rayonnement (22, 24) sont disposés latéralement à proximité du trajet de transport (3) sur différents côtés et mesurent le rayonnement réfléchi par les surfaces latérales des pièces peintes (6, 7) et/ou
d) un des détecteurs de rayonnement (23) se trouve au-dessus du trajet de transport (3) et mesure le rayonnement réfléchi par des surfaces horizontales, plus particulièrement par les surfaces de toitures et les surfaces de capots, des pièces peintes (6, 7).

8. Installation de peinture selon l'une des revendications précédentes, **caractérisée en ce que**
a) la machine à portail (16, 17) est mobile le long du trajet de transport (3) grâce à un dispositif de déplacement contrôlable et
b) le dispositif de déplacement (17-20) est commandé par une commande d'installation de façon à ce que la source de rayonnement (22-24 ; 35) et/ou le détecteur de rayonnement (22-24) se déplace de manière synchrone par rapport aux pièces peintes (6, 7) et dans une position relative constante par rapport aux pièces peintes (6, 7) le long du trajet de transport (3).

9. Installation de peinture selon l'une des revendications 1 à 7, **caractérisée en ce que** le détecteur de rayonnement (22-24 ; 35) est relié à un ordinateur de traitement d'images qui calcule le mouvement relatif entre les pièces peintes (6, 7) et le détecteur de rayonnement (22-24).

10. Installation de peinture selon l'une des revendications précédentes, **caractérisée en ce que**
a) une installation anti-incendie (32-38) avec au moins un capteur d'incendie (32), au moins un dispositif d'extinction (33) et une première unité de commande (34), est prévue, la première unité de commande (34) étant reliée, du côté de l'entrée, au capteur d'incendie (32) afin de détecter un incendie, et la première unité de commande (34) est reliée, du côté de la sortie, au dispositif d'extinction (33), afin d'activer le dispositif d'extinction (33) en cas d'incendie, et
b) la première unité de commande (34) détecte si la source de rayonnement (35) irradie les pièces peintes (6, 7) et **en ce que** la première unité de commande (34) bloque l'activation du dispositif d'extinction (33) tant que la source de rayonnement (35) irradie les pièces peintes (6, 7).

11. Installation de peinture selon l'une des revendications précédentes, **caractérisée en ce que**
a) la cellule de mesure (4, 5) présente une entrée par laquelle les pièces peintes (6, 7) sont transportées sur le trajet de transport (3) dans la cellule de mesure (4, 5), l'entrée pouvant de préférence être fermée par une porte roulante,
b) la cellule de mesure (4, 5) présente une sortie par laquelle les pièces peintes (6, 7) sont transportées sur le trajet de transport (3) hors de la cellule de mesure (4, 5), la sortie pouvant de préférence être fermée par une porte roulante,
c) l'entrée et/ou la sortie de la cellule de mesure (4, 5) présente une section d'ouverture variable afin d'adapter la section d'ouverture à la section des pièces peintes (6, 7).

12. Installation de peinture selon la revendication 11, **caractérisée par**
a) un dispositif d'approche (27), qui ajuste la section d'ouverture de l'entrée et/ou de la sortie de la cellule de mesure (4, 5) en fonction de la section des pièces peintes (6, 7), et
b) une deuxième unité de commande, qui commande le dispositif d'approche (27) en fonction de la section prédéterminée des pièces peintes (6, 7), et
c) un capteur de distance ou un dispositif photo-électrique (25, 26) relié à la deuxième unité de commande pour la détermination de la section des pièces peintes (6, 7), la deuxième unité de commande étant reliée à la commande de l'installation et recevant de la commande de l'installation les sections enregistrées dans pièces (6, 7) entrantes.

13. Installation de peinture selon l'une des revendications précédentes, **caractérisée en ce que**
a) la source de rayonnement (22-24 ; 35) présente un diaphragme qui limite le rayonnement à la surface des pièces à mesurer, et
b) le diaphragme présente des surfaces internes réfléchissantes, et/ou
c) le long du trajet de transport (3), plusieurs cellules de peinture (1, 2) sont disposées les unes derrière les autres, et
d) derrière chacune des cellules de peinture (1, 2) se trouve une cellule de mesure (4, 5) pour la mesure de l'épaisseur de la couche.

14. Installation de peinture selon l'une des revendications précédentes, **caractérisée par** un circuit de régulation qui
a) mesure, en tant que grandeur de régulation, l'épaisseur de couche (d_{IST}) de la peinture appliquée dans la cellule de mesure (4, 5) sur les pièces (6, 7),
b) compare l'épaisseur de couche (D_{IST}) mesurée avec une valeur de consigne (d_{SOLL}) prédéterminée et détermine un écart consigne-réel (Δd), et
c) commande un dispositif d'application (30) dans la cellule de peinture (1, 2) à l'aide d'un régulateur (29) en fonction de l'écart consigne-réel (Δd) de l'épaisseur de couche.
